Europäisches Patentamt

European Patent Office

Office européen des brevets

(11) Publication number: **0 496 407 A2**

# EUROPEAN PATENT APPLICATION

(21) Application number: **92101103.7**

(22) Date of filing: **23.01.92**

(51) Int. Cl.⁵: **G06F 9/38**

(30) Priority: **23.01.91 JP 6284/91**

(43) Date of publication of application:
**29.07.92 Bulletin 92/31**

(84) Designated Contracting States:
**DE FR GB**

(71) Applicant: **NEC CORPORATION**
**7-1, Shiba 5-chome Minato-ku**
**Tokyo 108-01(JP)**

(72) Inventor: **Arai, Tomohisa**
**c/o NEC Corporation, 7-1, Shiba 5-chome**
**Minato-ku, Tokyo(JP)**

(74) Representative: **Glawe, Delfs, Moll & Partner**
**Patentanwälte**
**Postfach 26 01 62**
**W-8000 München 26(DE)**

(54) **Parallel pipelined instruction processing system for very long instruction word.**

(57) In a parallel pipelined instruction processing system, one of a plurality of instruction processing units receives an input operand designated by a corresponding instruction of a given instruction block, through a corresponding input operand fetch unit from a data register block. A next address generation unit generates an address for an instruction block succeeding to the instruction block being executed. A branch address generation unit generates an address for a branch destination instruction block. When there is executed an instruction which is included in an instruction block after one machine cycle and which requires the next address supplied from the next address generation unit as an input operand the one instruction processing unit receives the next address directly from a short path control unit. In this case, the reading of the instruction block and the generation of the next address are concurrently executed, and the reading of the input operand and the generation of the branch address are concurrently executed.

FIGURE 1

## Background of the Invention

### Field of the invention

The present invention relates to a data processing system, and more specifically to a pipelined instruction processing system having a plurality of instruction processing units located in parallel for executing a plurality of instructions in parallel and each having a pipelined mechanism for a high speed data processing.

### Description of related art

A VLIW (very long instruction word) type parallel instruction processing has been known which is such that a relatively long instruction is divided into a number of instruction fields, and a number of processing units, a register/file interconnection network, a memory, etc. are independently controlled by the number of instruction fields, in such a manner that one of the processing units is controlled by a corresponding one of the instruction fields. With this arrangement, a parallel processing is realized.

In this VLIW system, parallelization of processings is executed at the time of the compiling and a compiler combines one instruction form instructions which can be processed or executed in parallel to each other Therefore, if the degree of parallelization of processings near to the number of the parallel processing units is realized, a high speed processing can be achieved. However, if the degree of parallelization of processings is low, some of the fields becomes empty, and therefore, a bit utilization efficiency of the instruction drops. To what degree the instruction fields can be filled is dependent upon capability of the compiler and a source program.

In the VLIW system, since parallelization of instructions is executed at the time of the compiling, it is not necessary to carry out a complicated processing such as detection of mutual dependence between items of data. Therefore, a hardware can be simplified.

This VLIW system can be said to be based on an idea originating from a horizontal microinstruction system, and to be suitable for an elaborate parallel processing using a plurality of processing units having a low degree of function (low level parallel processing).

In general, a process of executing a machine instruction in the computer system is achieved by sequentially performing an instruction fetching (abbreviated as "IF" in the specification and in the accompany drawings), an instruction decoding (abbreviated as "ID"), an operand address generation (abbreviated as "OA"), an operand fetching (abbreviated as "OD"), execution of operation (abbreviated as "EX"), and a writing back of the result of the execution of operation (abbreviated as "WB") in the named order. An instruction pipelined processing is realized by distributing the above mentioned processings into a plurality of processing stages, providing an, individual hardwares corresponding to each of the processing stages, and causing each individual processing hardware to execute its assigned processing in parallel to execution of the other processing hardwares. Accordingly, in an instruction pipelined system, the respective processing stages concurrently operates in overlap with each other Therefore, if all the processing stages have the same execution time which is the same as a machine cycle, the instruction pipelined system can exhibit its maximum performance, and the result of the operation can be obtained at every machine cycle.

At present, it has been considered that a flow of the instruction pipelined processing is disturbed:

 (a) when a succeeding instruction requires the result of execution of a preceding instruction:

 (b) when a preceding instruction determines an operand address for a succeeding instruction;

 (c) when a branch is generated;

 (d) when memory accesses conflict with each other;

 (e) when a preceding instruction rewrites a content of a succeeding instruction;

 (f) when an interrupt or an exception occurs;

 (g) when an instruction is so complicated as to need a plurality of machine cycle for execution of a required operation.

In order to suppress or minimize the above mentioned factors disturbing the instruction pipelined processing, various improvements have been attempted. For example, in order to suppress disturbance of the pipelined processing caused by a conditional branch, there have been proposed a loop buffer system using a large instruction buffer capable of storing a program loop, a plural instruction flow system processing an instruction stream when a condition for the conditional branch is satisfied and another instruction stream when the condition for the conditional branch is not satisfied, and a branch prediction system predicting a branch on the basis of a history of branch instructions.

In recent high performance microprocessors, attention is focused on a RISC (reduced instruction set computer) approach which attempts a high speed processing by simplifying machine instruction sets. This RISC approach was borne from analysis of a trace result of a high level language program and from the success of wired logics in the supercomputer CRAY-1. The RISC approach is characterized in:

 (a) a simplified instruction set based on a register-register operation;

(b) that importance is attached to a pipeline;

(c) one machine cycle execution; and

(d) utilization of last compiler technique.

The instruction set based on a register-register operation make the operand address generation unnecessary. The simplified instruction set simplifies the instruction decoding, and therefore, it becomes possible to cause the instruction decoding to be included in the operand fetch stage. In addition, the simplification of the operation shortens the execution time. On the other hand, a short path (SP) control is added to prevent disturbance of the pipeline attributable to data dependency between continuous instructions.

Furthermore, considering balance of the processings between the respective processing stages, there has been developed an instruction pipelined processing composed of three stages as follows:

(a) instruction fetch and operand fetch (IF/OF)

(b) instruction execution and short path (EX/SP)

(c) write back (WB)

In this instruction pipelined processing, an ideal pipelined processing is that ,for example, at a first machine cycle, the instruction fetch and operand fetch of a first instruction is performed, and at a second machine cycle next to the first machine cycle, the instruction execution and short path of the first instruction and the instruction fetch and operand fetch of a second instruction next to the first instruction are concurrently performed, and then, at a third machine cycle next to the second machine cycle, the write back of the first instruction, the instruction execution and short path of the second instruction and the instruction fetch and operand fetch of a third instruction next to the second instruction are concurrently performed.

However, if a first instruction is a branch instruction, it becomes possible to fetch a second instruction firstly during a machine cycle next to the machine cycle in which the execution stage for the first instruction was completed. Accordingly, it is necessary to invalidate an instruction fetched during the machine cycle in which the first instruction is executed. As a result, one empty machine cycle is generated in the pipelined processing, which leads to drop of the performance.

In order to minimize this drop of performance, a delayed branch mechanism has been used. This delayed branch mechanism is such that a branch instruction is deemed to be a delayed type instruction which is executed at a time later than issuance of the branch instruction by one machine cycle, and an instruction slot immediately after the branch instruction is filled with an valid instruction by means of an instruction scheduling performed by a compiler, so that the disturbance of the pipelined processing is avoided so as to maintain the performance.

However If the instruction slot immediately after the branch instruction was not filled with an valid instruction, it is necessary to fill a NOP (no-operation) instruction into the instruction slot immediately after the branch instruction. In this case, of course, the performance is decreased.

To what degree the delayed instruction slots can be filled with valid instructions, is dependent upon a performance of the compiler. At present, it has become possible to effectively utilize about 80% to 90% of the delayed instruction slots by using a recent compiler technique.

The above mentioned VLIW type parallel instruction processing and the above mentioned instruction pipelined processing can be combined to form a parallel pipelined instruction processing system. For example, consider a parallel pipelined instruction processing system in which four instruction pipelined processing units are arranged in parallel so as to execute a VLIW type instruction having four fields.

Assuming that the instruction pipeline of the parallel pipelined instruction processing system has a branch delay of one machine cycle similarly to the instruction pipeline of the above mentioned RISC microprocessor, the parallel pipelined instruction processing system has a delayed instruction slot corresponding to one slot. However, since one instruction is composed of four fields, a delayed instruction slot of four instruction fields effectively occurs. In addition, when one instruction includes a branch instruction in one of the four fields, the remaining three instruction fields included in the same instruction need to be treated similarly to the delayed instruction slot in view of the instruction dependency. Therefore, the four-parallel pipelined instruction processing system can be considered to be equivalent to a serial pipelined instruction processing system having seven delayed instruction slots.

However, it is extremely difficult to fill executable instructions into many empty instruction slots by means of the instruction scheduling in order to effectively utilize the slots. Therefore, NOP instructions have to be filled into most of the instruction fields. As mentioned hereinbefore, probability of filing even one valid instruction into an empty instruction slot is about 80% to 90% even if the current compiler technology is used. In view of this circumstance, it is extremely difficult to effectively utilize the seven empty instruction slots. Accordingly, the parallel pipelined instruction processing system utilizing the conventional pipelined mechanism having the branch delay of one machine cycle remarkably decreases its processing performance when a branch instruction is executed.

## Summary of the Invention

Accordingly, it is all object of the present invention to provide a parallel pipelined instruction processing system which has overcome the above mentioned defect of the conventional one.

Another object of the present invention is to provide a parallel pipelined instruction processing system capable of speeding up the processing by the VLIW parallel processing and the instruction pipelined processing, by making the branch instruction pipeline have a pipeline structure different from that of instruction pipelines other than the branch instruction, so that the branch causing no branch delay is realized.

The above and other objects of the present invention are achieved in accordance with the present invention by a parallel pipelined instruction processing system for processing "n" instructions in parallel (where "n" is a natural number not less than 2), the system comprising first memory means storing a number of instruction blocks each including "n" instructions arranged in parallel; instruction block fetch means for fetching an instruction block from the first memory means; "n" instruction processing means each processing a corresponding instruction of the "n" instructions included in the instruction block read from the instruction block fetch means; and second memory means storing operandi used by the instruction processing means, the second memory means being able to be read and written independently of the instruction processing means. Each of the instruction processing means includes an input operand fetch means for fetching from the second memory means an input operand necessary for execution of the corresponding instruction, instruction execution means for executing the corresponding instruction by using the input operand supplied from the input operand fetch means, and result operand write means for writing back to the second memory means a result operand obtained by execution of the corresponding instruction by the instruction execution means. The system also comprises a short path means for directly supplying a result operand obtained by execution of an instruction by one instruction execution means, to the same instruction execution means which executes an instruction which needs the result operand as an input operand and which is included in an instruction block later than the instruction block including the instruction by one machine cycle, so that the instruction block fetching and the input operand reading are performed concurrently, and then, the instruction processing and the short path processing are performed concurrently, and thereafter, the result operand writing is performed, whereby an instruction other than the branch instruction is executed by the pipelined processing. The system further comprises a next address generation means for generating an address for an instruction block to be executed next to the instruction block being executed, a branch address generation means for generating an address for a branch destination instruction block, and a second short path means for directly supplying the next address generated by the next address generation means, to a predetermined instruction execution means which executes an instruction which needs the next address as an input operand and which is included in an instruction block later than the instruction block being executed, by one machine cycle, so that the next instruction block reading and the next address generation are performed in parallel, and then, the input operand reading and the branch address generation are performed in parallel, and thereafter, the short path processing is performed, and then, the result operand writing is performed, whereby the branch instruction is executed by the pipelined processing.

The above and other objects, features and advantages of the present invention will be apparent from the following description of preferred embodiments of the invention with reference to the accompanying drawings.

## Brief Description of the Drawings

Figure 1 is a block diagram of an embodiment of the parallel pipelined instruction processing system in accordance with the present invention;

Figure 2 is a diagram illustrating an instruction format in the parallel pipelined instruction processing system shown in Figure 1;

Figure 3 is a timing chart illustrating the parallel processing structure in the parallel pipelined instruction processing system shown in Figure 1;

Figure 4 is a diagram illustrating a program sequence including a conditional branch instruction in the parallel pipelined instruction processing system shown in Figure 1; and

Figure 5 is a timing chart illustrating the instruction pipelined processing when the instructions shown in Figure 4 are executed.

## Description of the Preferred embodiments

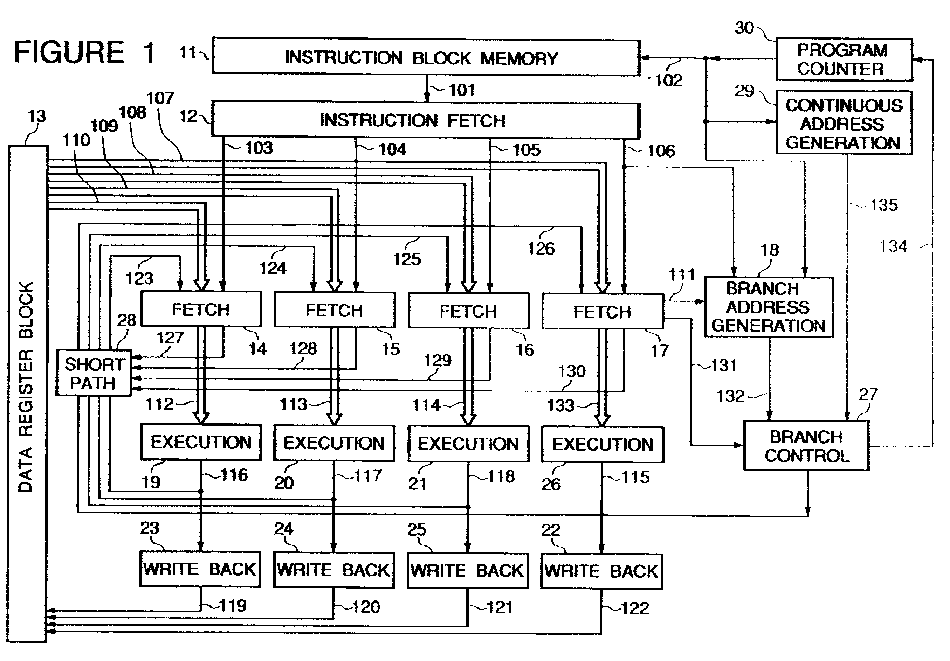

Referring to Figure 1, there is shown a block diagram of an embodiment of the parallel pipelined instruction processing system in accordance with the present invention, configured to execute four instructions in parallel by a VLIW type parallel instruction block composed of four instructions.

As shown in Figure 1, the parallel pipelined instruction processing system includes an instruction block memory 11, an instruction block fetch unit 12, a data register block 13 having eight read-out ports and four write ports, operand fetch units 14 to 17, a branch address generating unit 18 for generating an address of a branch destination instruction block, execution units 19 to 21 and 26 for executing an instruction processing, a branch control unit 27 for executing a branch instruction, operand write-back units 22 to 25, a short path control unit 28 for directly transferring the result of processing to the operand fetch unit when the result of processing is used in an instruction after one machine cycle, a continuous address generating unit 29 for generating an address for continuous instruction blocks to be executed in the case of no branching, and a program counter 30 for holding and supplying an address of an instruction block to be fetched.

The above mentioned various units are connected as shown by the following buses and signal lines; Through an instruction block bus 101 the instruction block fetch unit 12 fetches an instruction block from the instruction block memory 11. Through an address bus 102 an address for an instruction block to be fetched to the the instruction block fetch unit 12 is supplied from the program counter 30 to the instruction block memory 11 Through instruction buses 103 to 106, instructions of the instruction block fetched in the instruction block fetch unit 12 are transferred to the operand fetch units 14 to 17, respectively. Through four register read twin buses 107 to 110, input operandi necessary for execution of a given instruction are supplied front the data register block 13 to the operand fetch units 14 to 17, respectively. Through a source operand bus 111, the fetched input operand is transferred from the operand fetch unit 17 to the branch address generation unit 18. Through four register read twin buses 112 to 114 and 133, the fetched input operandi are transferred from the four operand fetch units 14 to 17 to the execution units 19 to 21 and 26, respectively. Through destination operand buses 115 to 118, the result of execution of instruction is transferred from the execution units 26 and 19 to 21 to the short path control unit 28 and also to operand write back units 23 to 25 and 22, respectively. Through register write buses 119 to 122, operandi are transferred from the operand write back units 23 to 25 and 22 to the data register block 13 so as to be written into the data register block 13. Through short path control signal lines 127 to 130, information of the short path is supplied from the operand fetch units 14 to 17 to the short path control unit 28, respectively. Through a branch condition operand bus 131, a branch condition operand is supplied from the operand fetch unit 17 to the branch control unit 27, and through a branch address bus 132, a branch destination address is supplied from the branch address generation unit 18 to the branch control unit 27. Through a next address bus 134, an address determined by the branch control unit 27 for an instruction block to be next executed is transferred from the branch control unit 27 to the program counter 30. Through a continuous address bus 135, a continuous addresses are supplied from the continuous address generation unit 29 to the branch control unit 27.

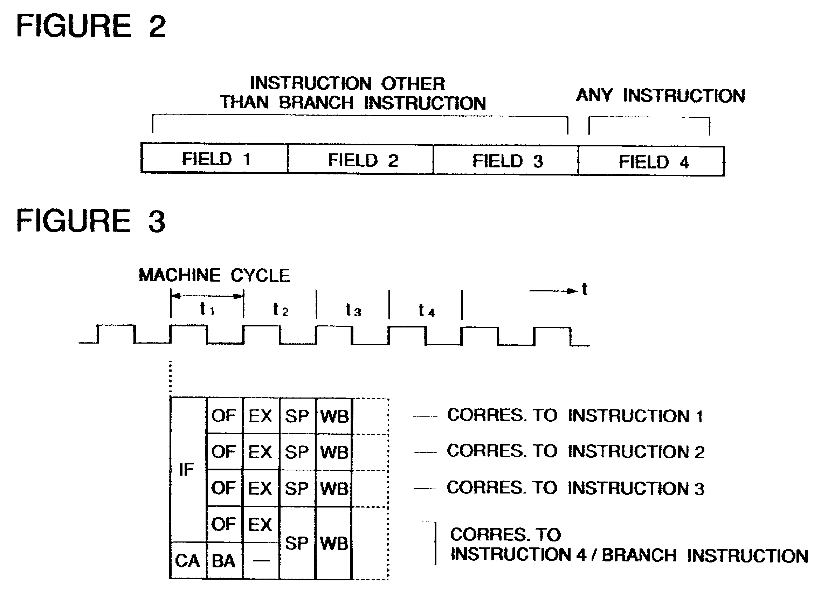

Referring to Figure 2, there is shown a diagram illustrating the format of an instruction block in the parallel pipelined instruction processing system shown in Figure 1. The instruction block includes four instruction fields 1 to 4. A branch instruction is located only in the field 4. In other words, instructions except for the branch instruction can be located in each of the fields 1 to 3, and all kinds instructions including the branch instruction can be located in the field 4,

Referring to Figure 3, there is shown a timing chart illustrating the pipelined structure in the parallel pipelined instruction processing system shown in Figure 1. Abbreviations "IF", "OF", "EX", "SP", :WB", "CA" and "BA" means the "instruction block fetch", the "operand fetch", the "instruction execution", the "short path", the "write back", the "continuous address generation", and the "branch address generation", respectively.

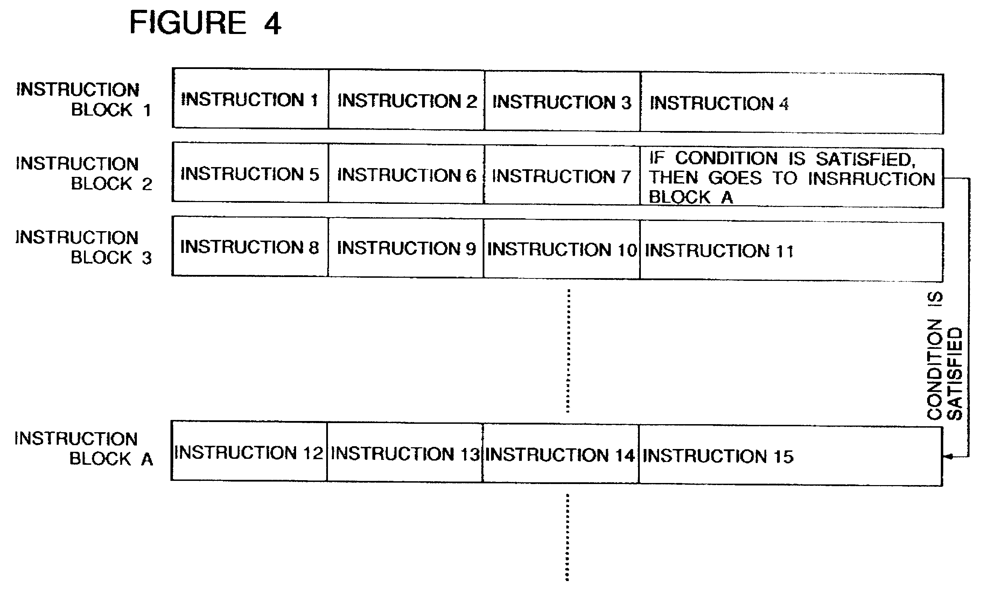

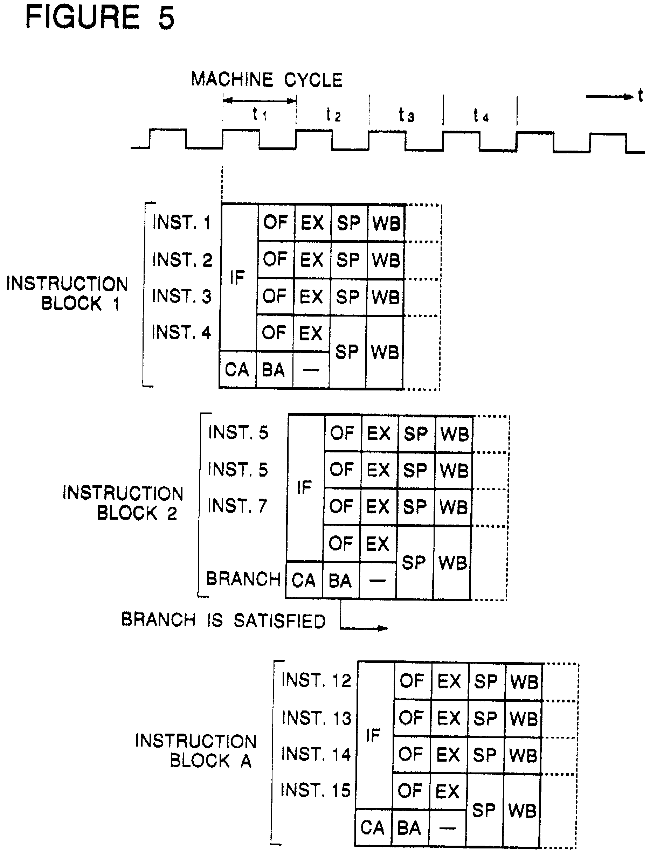

Referring to Figure 4, there is shown a diagram illustrating a program sequence including a conditional branch instruction in the parallel pipelined instruction processing system shown in Figure 1. Also referring to Figure 5, there is shown a timing chart illustrating the instruction pipelined processing when the program sequence shown in Figure 4 is executed.

Now, execution of the instruction block will be described with reference to Figures 1 and 2.

The instruction block fetch unit 12 fetches an instruction block through the instruction block bus 101 from the instruction block memory 11 in accordance with an address which is held in the program counter 30 and is supplied through the address bus 102. The instruction block fetch unit 12 then transfers respective instructions in the fields 1 to 4 illustrated in Figure 2, through the instruction buses 103 to 106 to the operand fetch units 14 to 17, respectively. In addition, the instruction in the field 4 is also transferred to the branch address generation unit 18. At the same time, the continuous address generation unit 29 generates an address for a next continuous instruction block on the basis of the address supplied through the address bus 102, and outputs the generated address to the continuous address bus 135.

Each of the operand fetch units 14 and 17 decodes the fetched instruction, and fetches an operand or operandi to be used in the fetched instruction, from the data register block 13 through a corresponding one of the four register read twin buses 107 to 110. The operand fetch units 14 and 17 also transfer the fetched operand or operandi to the execution units 19 to 21 and 26 through the source operand buses 112 to 114 and 133, respectively. At the same time, the operand fetch unit 17 supplies one of the fetched operands through the source operand bus 111 to the branch address generation unit 18. The branch address generation unit 18 generates a branch address on the basis of the instruction supplied through the instruction bus 106 and the address supplied through the address bus 102. At the same time, the branch address generation unit 18 decodes the instruction supplied through the instruction bus 106, so as to output to the branch address bus 132 an operand supplied from the source operand bus 111 in the case of a register indirect branch instruction, or the generated branch address in the case of the other branch instructions.

Each of the execution units 19 to 21 and 26 executes the received instruction by using operandi supplied from a corresponding one of the source operand buses 112 to 124 and 133, and outputs the result of execution to a corresponding one of the operand write back units 22 to 25 through a corresponding one of the destination operand buses 115 to 118. However, when the instruction 4 in the field 4 is a branch instruction, the execution unit 26 does not execute the received instruction, nor does it output the result of execution to the destination operand bus 115.

In this case, on the basis of a branch condition operand supplied through the branch condition operand bus 131 from the operand fetch unit 17, the branch control unit 27 supplies through the next address bus 134 to the program counter 30, the continuous address supplied from the continuous address bus 135 in the case that the branch condition is not satisfied, or the branch address supplied from the branch address bus 132 in the case that the branch condition is satisfied. If the branch instruction is a branch-and-link instruction (which is an instruction for writing the continuous address to the register at the same time as the time of branching, and which is used in a subroutine call, etc.) the branch control unit 27 supplies the branch address to the program counter 30 and at the same time transfers the continuous address through the destination operand bus 115 to the operand write back unit 22.

Thereafter, each of the operand write back units 22 to 25 writes back an operand of result of execution to a register of the data register block 13 designated by a corresponding instruction, through a correspond one of the register write buses 119 to 122.

If the result of execution of the instruction executed in the just preceding machine cycle is used as an input operand for the received instruction, the short path control is performed by the short path control unit 28. The following description will be made by assuming that the instruction (2) located in the field 3 of a given instruction block uses the result of execution of the instruction (1) located in the field 1 of the just preceding instruction block executed just before the given instruction block.

If the operand fetch unit 16 which has received the instruction (2) from the instruction bus 105, detects that one of necessary input operandi is the result of execution of the instruction (1) of the instruction block executed just before, the operand fetch unit 16 outputs the short path control signal 129 to the short path control unit 28. In response to the short path control signal 129, the short path control unit 28 transfers the operand of the result of execution on the destination operand bus 118, through the short path 125 to the operand fetch unit 16. The operand fetch unit 16 fetches one of the input operandi (namely, the result of execution of the instruction (1) of the instruction block executed just before) from the short path 125 in place of one bus of the register read twin bus 108, and supplies the fetched operand to the source operand bus 114. When the short path is realized, the instruction is treated in the procedure as mentioned above.

The timing of the above mentioned processing will be described with reference to Figure 3. Figure 3 illustrates a flow of processing when one instruction block is executed. A first or uppermost row to a third row illustrate the processings of the instructions (1) to (3), respectively. The lowermost two rows correspond to the processing of the instruction (4). "IF" indicates a timing where the instruction block fetch unit 12 fetches the instruction block. "OF" shows a timing where the operand fetch units 14 to 17 fetch the operandi from the register block 13. "EX" indicates a timing of the instruction execution of the execution units 19 to 21 and 26. "SP" shows a timing of the short path control by the short path control unit 28. "WB" indicates a timing of the writing of the operand by the operand write back units 22 to 25. "CA" shows a timing of the continuous address generation of the continuous address generation unit 29. "BA" indicates a timing of the branch address generation of the branch address generation unit 18.

Now, consider the processing when the parallel pipelined instruction processing system shown in Figure 1 processes the program sequence shown in Figure 4. In the program sequence shown in Figure 4, an instruction block 2 includes a conditional branch instruction, and if the branch condition is satisfied, the sequence is branched from the instruction block 2 to an instruction block A.

Operation of the pipelined processing when the program sequence shown in Figure 4 is executed will be described with reference to Figure 5. In the processing of the instruction block 2, the pipelined operation for processing the field 4 is executed in such a manner that the continuous address is generated concurrently with the fetching of the instruction block and the branch address is generated concurrently with the fetching of the operand. Accordingly, at the completion of the machine cycle $t_2$, it is possible to determine a next address by using the content of the fetched operandi, and to update the program counter 30. Therefore, the processing of the instruction block A can be started from the machine cycle t3.

Accordingly, even when the instruction block including the branch is executed, no empty slot occurs in the pipelined processing. Therefore, the number of empty slots which have to be filled by the optimizing compiler in accordance with the instruction scheduling, can be reduced in comparison with the conventional parallel pipelined instruction processing system. Namely, a parallel pipelined instruction processing system having a high efficiency can be realized.

For example, as mentioned hereinbefore, the conventional parallel pipelined instruction processing system having the branch delay of one machine cycle had required that, in order to maximize the performance, the instruction scheduling of the optimizing compiler fills effective instructions into seven slots at total which includes three instruction slots of the instructions (5) to (7) and four instruction slots in the succeeding delay instruction block. In the parallel pipelined instruction processing system shown in Figure 1; on the other hand, it is sufficient if the three slots of the instruction slots (5) to (7) in the instruction block "2" are filled with effective instructions.

As seen from the above description with reference to the drawings, the parallel pipelined instruction processing system in accordance with the present invention is characterized in that no empty instruction slot occurs in an instruction block including therein a branch instruction. Therefore, the parallel pipelined instruction processing system in accordance with the present invention can realize a high efficiency, by combining both the advantage of the VLIW type parallel processing which realizes the parallel processing by the simple hardware and the parallel instruction scheduling at the time of compiling, and the advantage of the high speed processing given by the instruction pipelined processing. In addition, since the empty slots which must be filled with the compiler can be reduced, the parallel instruction scheduling can become easy.

The invention has thus been shown and described with reference to the specific embodiments. However, it should be noted that the present invention is in no way limited to the details of the illustrated structures but changes and modifications may be made within the scope of the appended claims.

## Claims

1. A parallel pipelined instruction processing system for processing "n" instructions in parallel (where "n" is a natural number not less than 2), the system comprising:

first memory means storing a number of instruction blocks each including "n" instructions arranged in parallel;

instruction block fetch means for fetching an instruction block from said first memory means;

"n" instruction processing means each processing a corresponding instruction of the "n" instructions included in the instruction block read from the instruction block fetch means;

second memory means storing operandi used by said instruction processing means, said second memory means being able to be read and written independently of said instruction processing means,

each of said instruction processing means including

an input operand fetch means for fetching from said second memory means an input operand necessary for execution of said corresponding instruction,

instruction execution means for executing said corresponding instruction by using the input operand supplied from said input operand fetch means, and

result operand write means for writing back to said second memory meal's a result operand obtained by execution of said corresponding instruction by said instruction execution means, the system also comprising:

a short path means for directly supplying a result operand obtained by execution of an instruction by one instruction execution means, to the same instruction execution means which executed an instruction which needs said result operand as an input operand and which is included in an instruction block later than the instruction block including said instruction by one machine cycle;

so that the instruction block fetching and the input operand reading are performed concurrently, and then, the instruction processing and the short path processing are performed concurrently, and thereafter, the result operand writing is performed, whereby an instruction other than the branch instruction is executed by the pipelined processing,

the system further comprising:

a next address generation means for generating an address for an instruction block to be executed next to the instruction block being executed;

a branch address generation means for generating an address for a branch destination instruction block;

a second short path means for directly supplying said next address generated by said next address generation means, to a predetermined instruction execution means which executes an instruction which needs said next address as an input operand and which is included in an instruction block later than the instruction block being executed, by one machine cycle;

so that the next instruction block reading and the next address generation are performed in parallel, and then, the input operand reading and the branch address generation are performed in parallel, and thereafter, the short path processing is performed, and then, the result operand writing is performed, whereby the branch instruction is executed by the pipelined processing.

2. A system claimed in Claim 1 wherein said second memory means includes a data register block.

3. A system claimed in Claim 1 further including a program counter for supplying said first memory means with an address for an instruction block to be next processed, and a branch control means coupled to said next address generation means and said branch address generation means for writing to said program counter the address for an instruction block to be next processed.

4. A parallel pipelined instruction processing system for processing a plurality of instructions in parallel, the system comprising first memory means storing a number of instruction blocks each including a plurality of instructions arranged in parallel, instruction block fetch means for fetching an instruction block from said first memory means, a plurality of instruction processing means each processing a corresponding instruction of the plurality of instructions included in the instruction block read from the instruction block fetch means;

second memory means storing operandi used by said instruction processing means, said second memory means being able to be read and written independently of said instruction processing means, a next address generation means for generating an address for an instruction block succeeding to the instruction block being executed, a branch address generation means for generating an address for a branch destination instruction block, the above means being arranged so that, when there is executed an instruction which is included in an instruction block after one machine cycle and which requires the next address supplied from the next address generation means as an input operand, one instruction processing means receives the next address directly from a short path control unit, and the reading of the instruction block and the generation of the next address are concurrently executed, and the reading of the input operand and the generation of the branch address are concurrently executed.

# FIGURE 1

FIGURE 1

INSTRUCTION BLOCK MEMORY

PROGRAM COUNTER

INSTRUCTION FETCH

CONTINUOUS ADDRESS GENERATION

DATA REGISTER BLOCK

FETCH  FETCH  FETCH  FETCH

BRANCH ADDRESS GENERATION

SHORT PATH

EXECUTION  EXECUTION  EXECUTION  EXECUTION

BRANCH CONTROL

WRITE BACK  WRITE BACK  WRITE BACK  WRITE BACK

EP 0 496 407 A2

# FIGURE 2

|       | INSTRUCTION OTHER THAN BRANCH INSTRUCTION | | ANY INSTRUCTION |
|-------|---------|---------|---------|
| FIELD 1 | FIELD 2 | FIELD 3 | FIELD 4 |

# FIGURE 3

MACHINE CYCLE

| | | | | | | |
|----|----|----|----|----|----|---|
| | | OF | EX | SP | WB | |
| IF | | OF | EX | SP | WB | |
| | | OF | EX | SP | WB | |
| | | OF | EX | | | |
| CA | BA | — | | SP | WB | |

— CORRES. TO INSTRUCTION 1

— CORRES. TO INSTRUCTION 2

— CORRES. TO INSTRUCTION 3

CORRES. TO
INSTRUCTION 4 / BRANCH INSTRUCTION

10

# FIGURE 4

| INSTRUCTION BLOCK 1 | INSTRUCTION 1 | INSTRUCTION 2 | INSTRUCTION 3 | INSTRUCTION 4 |
|---|---|---|---|---|
| INSTRUCTION BLOCK 2 | INSTRUCTION 5 | INSTRUCTION 6 | INSTRUCTION 7 | IF CONDITION IS SATISFIED, THEN GOES TO INSRRUCTION BLOCK A |
| INSTRUCTION BLOCK 3 | INSTRUCTION 8 | INSTRUCTION 9 | INSTRUCTION 10 | INSTRUCTION 11 |
| INSTRUCTION BLOCK A | INSTRUCTION 12 | INSTRUCTION 13 | INSTRUCTION 14 | INSTRUCTION 15 |

CONDITION IS SATISFIED

EP 0 496 407 A2

# FIGURE 5

MACHINE CYCLE

BRANCH IS SATISFIED